# EUROPEAN PATENT APPLICATION

(11) **EP 1 944 920 A1**
(43) Date of publication of application: **16.07.2008**
(21) Application number: 07000453.6
(22) Date of filing: 10.01.2007
(51) Int. Cl.: H04L 12/56

(54) **Method for scheduling transmissions in a radio communications system and access node thereof**

(71) Applicant: Siemens Networks GmbH & Co. KG, 81541 München (DE)
(72) Inventor: The designation of the inventor has not yet been filed
(74) Representative: Maier, Daniel Oliver

(57) **Abstract**

Access node and Method thereof in a radio communications system comprising means adapted for scheduling at least one transmission of a plurality of transmissions between a user equipment of a plurality of user equipments and said access node, comprising:
- transceiver means arranged to transmit to said at least one user equipment a first message, said first message indicating to said at least one user equipment an allocation of at least one bandwidth block of a plurality of bandwidth blocks for transmitting said at least one transmission;
- control means arranged to determine an amount of interference present in said at least one transmission received by said access node, and
- transceiver means further arranged to transmit to said at least one user equipment, upon said amount of interference reaching and/or exceeding a threshold, a further message indicating at least one further bandwidth block for transmitting said at least one transmission, said further message having a shorter length than said first message.

## Description

### Field of the invention

The invention is used in radio communications systems such as wireless radio communications systems or cellular radio communications systems, to ensure that transmissions can be performed in an efficient manner without reducing the overall efficiency of the radio communications systems, as well as of the quality of the transmissions due to the presence of interference within such radio communications systems.

### Summary of the invention

Existing 2G (2^{nd} Generation Wireless Mobile Communication Technology) and 3G (3^{rd} Generation Wireless Mobile Communication Technology) radio communications systems require intensive network planning in order to achieve a high capacity of UEs (User Equipments) and user satisfaction based on pre-determined traffic models, network topology data and networking scenarios.

In radio communications systems beyond 3G such as for example UTRAN-LTE (Universal Mobile Telecommunications System Terrestrial Radio Access Network-Long Term Evolution) which is intended to replace UMTS (Universal Mobile Telecommunications System), it is envisaged that the number of UEs will increase dramatically as more and more subscribers purchase UEs and take advantage of the numerous new services that are being provided by network operators.

However, as the number of UEs increases so will the number of ANs (Access Nodes) in order to accommodate all UEs present. As a consequence, this will lead to an increase in the interference present within the radio communications system. As a result of this, transmissions between UEs and ANs will be affected and their quality will degrade. This will cause an increase in the amount of signalling between UEs and ANs in order for retransmissions to be executed. However, this increase leads to an increase in the signalling overhead and a reduction in the efficiency of the radio communications system. In the case that the interference is very bad, it might even be necessary for UEs to terminate (stop) their transmissions and so further reducing the efficiency of the radio communications system. Moreover, as the interference within the radio communications system fluctuates at all times, it is not possible to schedule UEs to transmit at times when the amount of interference present is low enough so that the effects are negligible.

A need therefore exists for a technique that provides for a technique that allows for the scheduling of transmissions from UEs to ANs in such a manner that UEs can transmit at all times while at the same time removing the effects of the interference present and ensuring that the radio communications system maintains highly efficient.

With the present invention, the above mentioned issues are resolved. The technique is achieved by the teachings contained in the independent claims. Preferred embodiments of the invention are described in the dependent claims.

Said independent method claim schedules at least one transmission of a plurality of transmissions between a user equipment of a plurality of user equipments and an access node of a plurality of access nodes in a radio communications system, comprising the steps of:
- transmitting by said at least one access node to said at least one user equipment a first message, said first message indicating to said at least one user equipment an allocation of at least one bandwidth block of a plurality of bandwidth blocks for transmitting said at least one transmission;
- determining by said at least one access node an amount of interference present in said at least one transmission received by said access node;
- transmitting by said at least one access node to said at least one user equipment, upon said amount of interference reaching and/or exceeding a threshold, a further message indicating at least one further bandwidth block for transmitting said at least one transmission, said further message having a shorter length than said first message.

Said independent access node claim comprises means arranged for scheduling, in a radio communications system, at least one transmission of a plurality of transmissions between at least one user equipment of a plurality of user equipments and said access node of a plurality of access nodes, comprising:
- transceiver means arranged to transmit to said at least one user equipment a first message, said first message indicating to said at least one user equipment an allocation of at least one bandwidth block of a plurality of bandwidth blocks for transmitting said at least one transmission;
- control means arranged to determine an amount of interference present in said at least one transmission received by said access node;
- transceiver means further arranged to transmit to said at least one user equipment, upon said amount of interference reaching and/or exceeding a threshold, a further message indicating at least one further bandwidth block for transmitting said at least one transmission, said further message having a shorter length than said first message.

The proposed technique allows for a more efficient scheduling of transmissions in a radio communications system to be achieved. User equipments are notified of the allocation of bandwidth they are to use in a first message. Once the interference present reaches and/or exceeds a threshold then user equipments again notified in a further message of a new allocated bandwidth to use for transmitting. In changing the bandwidth used, it is possible to overcome the effects of interference taking place. In addition, as the further message is shorter in length that the first message less radio resources are consumed in order to transmit the information to the user equipments, less data is transmitted and the signalling overhead is reduced. Thus leading to an increase of the efficiency of the radio communications system.

Further advantages can be seen in the dependent claims wherein, the bandwidth blocks allocated comprise of a plurality of adjacent frequencies. As the frequencies allocated are adjacent (or consecutive) processing is simplified. The amount of interference is determined using at least one of the following parameters: a signal interference plus noise ratio measurement, a signal to noise ratio, a bit error rate, a number of positive or negative acknowledgments, a channel gain value. Thus providing a variety of ways of determining whether a received transmission is suffering from interference. The further message transmitted comprises of information indicating at least one of the following: a swapping of bandwidth blocks, an addition of bandwidth blocks, a shifting of bandwidth blocks. In this way, it is possible to flexibly allocate and manage bandwidth blocks depending for example on the number of UEs present, the number of bandwidth blocks already allocated. Thus providing for an efficient scheduling mechanism that is not linked to one particular allocation mechanism. A SC-FDMA (Single Carrier - Frequency Division Multiple Access) transmission scheme is used for transmissions between UEs and ANs. SC-FDMA provides for better PAPR (Peak to Average Power Ratio) properties due to its single carrier structure than for example other multiple access schemes such as OFDMA (Orthogonal Frequency Multiple Access). A lower PAPR greatly benefits UEs in terms of transmit power efficiency.

### Short description of the drawing

The present invention will become more fully apparent from the detailed description given herein below and the accompanying drawings which are given by way of illustration only, and thus are not limitative of the present invention, and wherein:
- Fig. 1: depicts a radio communications system 1000 wherein the inventive technique can be implemented.
- Fig. 2: depicts a more detailed view of the radio communications system 1000.
- Fig. 3: depicts the steps performed by the inventive technique.
- Fig. 4a - 4c: depict a possible format for the transmitted messages.
- Fig. 5: depicts a further example of how the invention functions.
- Fig. 6: depicts an access node wherein the inventive technique is implemented.

### Detailed description of the invention

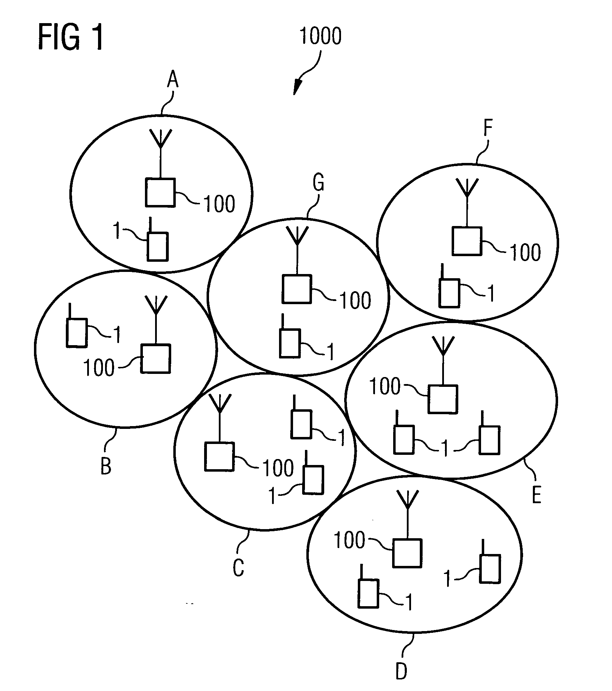

Fig. 1 depicts a radio communications system 1000. Such a radio communications system can be a cellular radio communications system or a wireless radio communications system. Radio communications system 1000 comprises of a plurality of ANs 100 and a plurality of UEs 1. Each AN 100 controls a certain area of radio communications system 1000 known as a cell A, B, C, D, E, F, G. ANs 100 allow UEs 1 to connect to the internet and/or the PSTN (Public Switched Telephone Network). For reasons of ease of understanding of the invention these as well as devices used to further provide management and control of such connections, for example gateways and/or MSCs (Mobile Switching Centres) are not depicted; however a person skilled in the art would be aware of their existence. ANs 100 can be at least one of the following: a BS (base station), a nodeB, a BSC (base station controller), a RNC (radio network controller).UEs 1 can be at least one of the following: a mobile telephone, a cellular device, a portable computer.

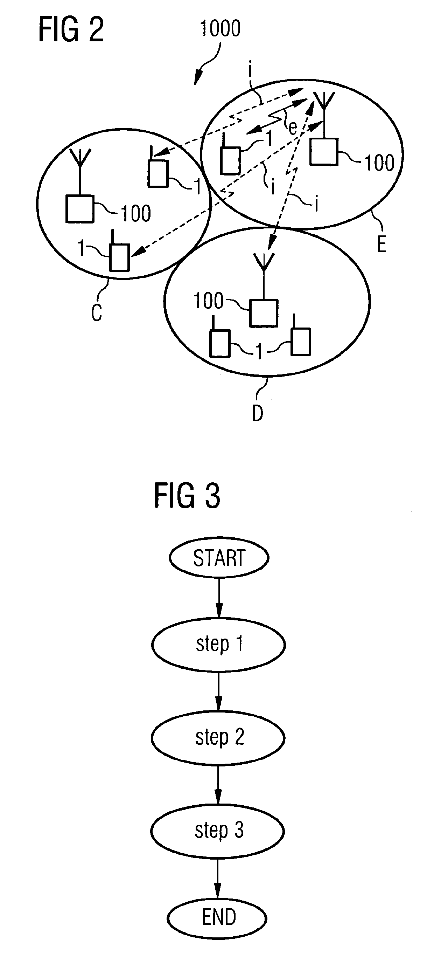

Fig. 2 depicts a more detailed view of radio communications system 1000. For ease of understanding only cells C, D and E are depicted. UE 1' of cell E is transmitting over a link 1 to AN 100 of cell E. The other UEs 1 from cells C and D also transmit to their respective ANs 100. However, the transmissions from these UEs 1 will also reach AN 100 of cell E as interference brought along paths i. This interference can cause AN 100 not to be able to correctly receive the transmission from UE 1' and will thus lead to the issues mentioned herein above and to a reduction of the efficiency of radio communications system 1000.

Fig. 3 depicts the steps performed by the proposed inventive technique. In step 1, AN 100 transmits a first message to the UEs 1. This first message indicates to the UEs 1 the allocation (assignment) of at least one bandwidth block of a plurality of bandwidth blocks for transmitting at least one transmission to the AN 100. The first message is a configuration message and can be transmitted over a shared channel, so that all UEs 1 receive the information regarding the allocation. The bandwidth blocks comprise of a plurality of adjacent frequencies or subcarriers from the available radio resources. When more that one bandwidth block is allocated then all the frequencies or subcarriers allocated are consecutive within the allocation. In step 2, AN 100 determines the amount of interference present in a transmission received. The step of determining the amount of interference present includes the tasks of actively monitoring received transmissions, measuring certain parameters and consequently determining (calculating) the amount of interference as well as checking whether the amount determined reaches and/or exceeds a threshold. In step 3, upon the amount of interference reaching and/or exceeding a threshold, AN 100 transmits a further message indicating at least one further bandwidth block for transmitting the at least one transmission. The further message in this case however has a shorter length i.e., less bits than the first message. The further message can be one of the following messages: a swap message, an add message and a shift message which combines both the swap and the add messages. The further messages can be transmitted over a common channel between AN 100 and UE 1.

The threshold is a value of a parameter that is monitored, measured and/or determined when receiving transmissions from UEs 1. In one embodiment a SINR (Signal Interference plus Noise Ratio) value is used as the threshold. Alternatively, a BER (Bit Error Rate), a SNR (Signal to Noise Ratio), a number of positive ACKs (Acknowledgments) or NACKs (Negative - Acknowledgements), a channel gain value. Furthermore, it is also possible to use a combination of at least one of the above parameters instead of only one.

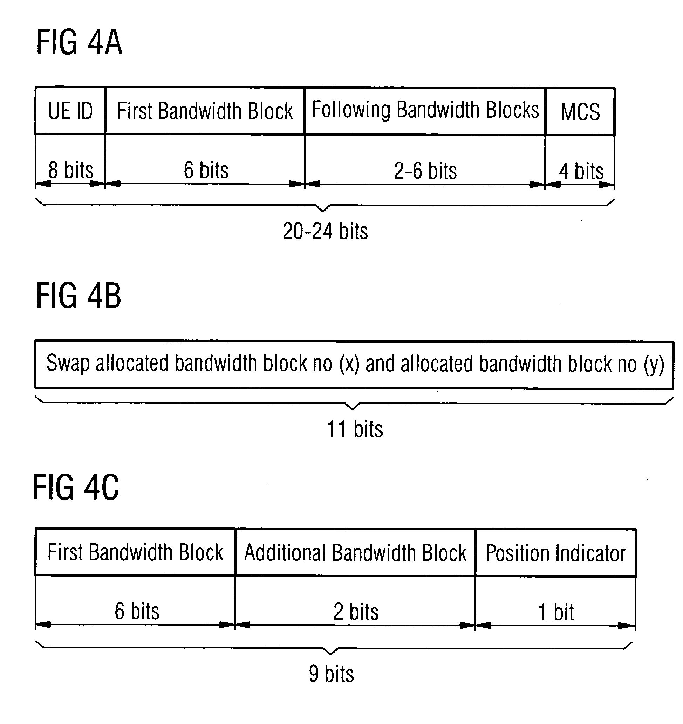

Fig. 4a shows a possible format for a first message such as a configuration message. The message comprises of a UE ID (identity) such as a MAC (Media Access Control) ID or address of a UE, having for example a length of 8 bits, the first bandwidth block to be used by the UE, having for example a length of 6 bits, the number of bandwidth blocks following the first bandwidth block to be used by the UE, having for example a length of 2 - 6 bits, a MCS (Modulation and Coding Scheme) parameter indicating the modulation and coding scheme to be used by UE 1 when transmitting to an access node, having for example a length of 4 bits. The first message therefore in this example having a length of 20 - 24 bits. The modulation scheme used can be one of the following: QPSK (Quadrature Phase-Shift Keying), 16QAM (16 Quadrature Amplitude Modulation). A single such message transmitted per TTI (Transmission Interval Time) is sufficient to keep all UEs 1 updated with the configuration needed in order to schedule transmissions.

Fig. 4b shows a possible format for a further message such as a swap message. AN 100 can transmit a single swap message per TTI or in order to allow for multiple swaps in the same TTI several swap messages. The message comprises of data indicating a swapping of an first allocated bandwidth block and of a second allocated bandwidth block, having a length for example of 11 bits. As it can be seen, no UE IDs are involved. As the message is transmitted over a common channel that is monitored by all UEs 1, as all UEs 1 are aware of their allocated bandwidth blocks via the first message, the intended recipient UEs 1 of the swap message will immediately recognise that the message and execute the swap. This message allows AN 100 to sort UEs 1 iteratively according to channel quality for example, and thereby is responsible for multi-user diversity.

Fig. 4c shows a possible format for a further message such as an add message. AN 100 can transmit a single add message per TTI or several add messages per TTI. The message, having a length for example 9 bits, comprises of data indicating an addition of resource blocks to an existing allocation of resource blocks, the data also comprises an indicator such as a flag or pointer indicating either the upper or the lower edge of the existing (or current) allocated bandwidth blocks where the addition is to be made. As it can be seen, no UE IDs are involved. As the message is transmitted over a common channel that is monitored by all UEs 1, as all UEs 1 are aware of their allocated bandwidth blocks via the first message, the intended recipient UEs 1 of the add message will immediately recognise that the message and execute the add. The add message is responsible for traffic adaptation.

As it can be seen, the further messages that are transmitted do not use the UE ID and the information that is transmitted is the difference in the bandwidth block allocation between the first allocation provided by the first message and the further message. In effect the AN 100 transmits in the further message only the changes (or delta) to the original allocation that are going to be executed. This reduces the amount of data being transmitted and reduces the signalling overhead. Thus it ensures a high efficiency for the radio communications system 1000 as UEs 1 are provided with a better scheduling enabling them to overcome interference that affects their transmissions. Additionally, due to the fact that simpler and shorter message formats are used, less processing is required as well as less complex circuitry.

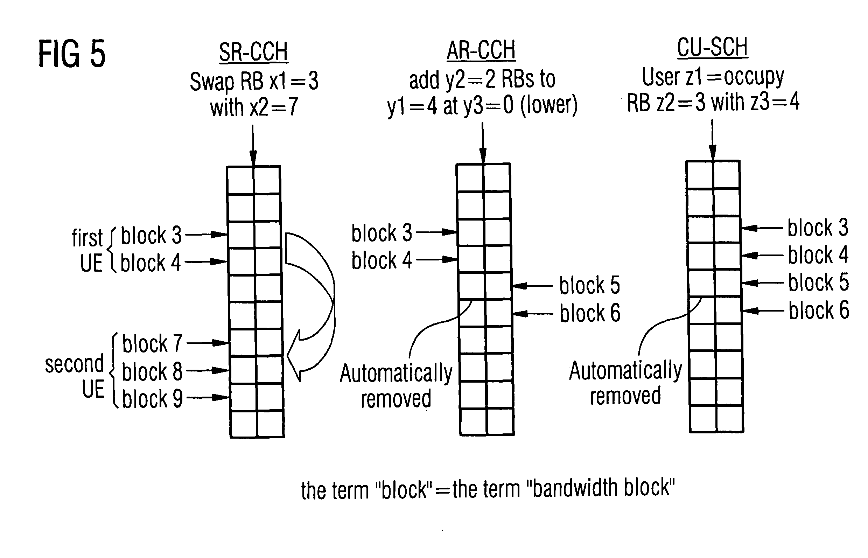

Fig. 5 depicts a further example of how the invention functions.

The leftmost column under the heading SR-CCH (Swap Resource - Common Channel) relates to a swap bandwidth blocks message transmitted by AN 100.

The left hand side refers to the allocation of bandwidth blocks at a UE 1 prior to receiving the message. In this example, a first UE 1 has been assigned two bandwidth blocks, these being the third and fourth bandwidth blocks out of the available bandwidth blocks. A second UE 1 has been assigned three bandwidth blocks, these being the seventh, eighth and ninth bandwidth blocks out of the available bandwidth blocks.

A swap bandwidth blocks message is received at some point over the common channel such as a common control channel which is monitored by all UEs 1, thus it is heard by both the first and the second UE 1. The message indicates a swap of the third bandwidth block and the seventh bandwidth block. The first UE 1 will then start using the three bandwidth blocks that were previously used by the second UE 1, these being the seventh, eighth and ninth bandwidth blocks. Similarly, the second UE 1 then starts using the two bandwidth blocks that were previously used by the first UE 1, these being the third and fourth bandwidth blocks. This is depicted on the right hand side. It is also possible, when swapping, to ensure that the first UE 1 uses the same number of bandwidth blocks as it was originally assigned i.e. two bandwidth blocks for the first UE 1 and for the second UE 1 three bandwidth blocks.

The middle column under the heading AR-CCH (Add Resource - Common Channel) relates to an add bandwidth blocks message.

The left hand side refers to the allocation of bandwidth blocks at a UE 1 prior to receiving a message. In this example, a UE 1 has been assigned two bandwidth blocks, these being the third and fourth RB of the available bandwidth blocks. An add bandwidth blocks message is received at some point over the common channel. The message indicates an addition of two bandwidth blocks to the existing ones. The message comprises of an indicator such as a flag or pointer indicating either the upper or the lower edge of the existing (or current) bandwidth blocks of UE 1. In the example, the indicator indicates the lower edge and so the fifth and sixth bandwidth blocks are added. This is depicted on the right hand side. If the added bandwidth blocks were previously assigned to a further UE 1, as the message is transmitted over a common channel such as a common control channel, which is monitored by all UEs 1, the further UE 1 is aware of this change and will automatically release those bandwidth blocks i.e. it will stop using the frequencies that are within the bandwidth blocks assigned originally to it.

The rightmost column under the heading CR-SCH (Configure Resource - Shared Channel) relates to a configure bandwidth blocks message.

The left hand side refers to the allocation of bandwidth blocks prior to an assignation being made. A configure bandwidth blocks message is transmitted over a shared channel such as a shared common channel, indicating to a UE 1 that it is being assigned a certain number of bandwidth blocks starting with a particular first bandwidth block. In the example depicted, UE 1 is assigned four bandwidth blocks starting from the third bandwidth block. If the allocated bandwidth blocks were previously allocated to a different UE 1, the new allocation will remove the previous allocations as all UEs 1 receive the message.

Fig. 6 depicts an AN 100 wherein the inventive technique is implemented. Such an AN 100 can be at least one of the following: a BS (Base Station), a nodeB, a BSC (Base Station Controller), a RNC (Radio Network Controller). AN 100 comprises of means arranged to implement the inventive technique. These means can be implemented for example on an integrated circuit board, a chip, a microcomputer or by any other means arranged for such purposes. AN 100 is also arranged to use a SC-FDMA transmission scheme when transmitting to UEs 1.

Access node (AN) 100 comprises of transceiver means 101 arranged to transmit and/or receive transmissions to and from UEs 1. AN 100 also comprises of control means 102 arranged to control the functioning of AN 100 as well as power means 103 arranged to provide power in order for AN 100 to function.

The transceiver means 101 are arranged to transmit a first message to at least one UE 1 indicating an allocation of at least one bandwidth block for transmitting at least one transmission to the AN 100. Transceiver means 101 are also further arranged to transmit a further message upon a threshold being reached and/or exceeded. The further message indicates at least one further bandwidth block for transmitting the at least one transmission to AN 100. The further message has a shorter length (or smaller size) than said first message. The transceiver means 101 are further arranged to generate the appropriate message length. Transceiver means 101 are also arranged to transmit messages over different channels, such as a shared channel for the first message and a common channel for the further message.

Control means 102 are also arranged to determine an amount of interference present in at least one transmission received by the AN 100 via transceiver means 101. Control means 102 are arranged so that when determining the amount of interference present the tasks of actively monitoring received transmissions, measuring certain parameters and consequently determining (calculating) the amount of interference as well as checking whether the amount determined reaches and/or exceeds a threshold are performed simultaneously or in consecutive steps. The control means 102 are also further arranged to use at least one of the following parameters to determined the amount of interference present: a signal interference plus noise ratio measurement, a signal to noise ratio, a bit error rate, a number of positive or negative acknowledgments, a channel gain value. Also control means 102 are further arranged to allocate bandwidth blocks comprising of adjacent frequencies. When allocating bandwidth blocks, control means 102 are arranged to indicate that the message to be transmitted by transceiver means 101 to UE 1, is a first or further message, thus ensuring that transceiver means 101 transmit a message having the appropriate length (size).

In addition, a user equipment (UE) 1 comprises of transceiver means 10 arranged to transmit and receive transmissions from AN 100, control means 11 arranged to control the UE 1 as well as upon reception of messages indicating bandwidth blocks to be used for transmitting transmissions, to use and change when necessary the frequencies used for the transmissions. UE 1 also comprises of power means 12 such as a rechargeable power cell or battery, arranged to provide power for the UE 1 to function.

Furthermore, the inventive technique described herein above is highly efficient as it does not require a high number of messages to be transmitted at any one time within the radio communications system 1000. The transmitted messages, for example the swap and the add messages, are not scaled with the number of UEs 1 present in the radio communications system 1000, but only with the available radio resources i.e. the RBs. This has the advantage that the messages can be coded using a small number of bits, as they do not need to incorporate a UE ID, which can be large when there a large number of UEs are present. For example in HSDPA 16 bits are required for the UE ID. As the signalling load is small, the interference caused is stable and thus the efficiency of the radio communications system 1000 is not reduced. It allows for ANs 100 to flexibly schedule the frequencies at which UEs 1 can transmit in a simple and efficient manner, as well as ensuring multi-user gain. Also, the inventive technique can even function when the channel between access node and UE is not known over the entire frequency band. Knowledge of the channel within the single carrier is sufficient.

Additionally, every UE 1 that with data that it wants to transmit to AN 100 can do so continuously. Any issues that caused by interference are resolved by the AN 100 so that the UE 1 does not suffer any degradation or have to stop its transmission. Furthermore, the inventive technique, allows for the allocation of radio resources i.e. the scheduling of the different bandwidth blocks, to be executed in a constant a manner as possible while at the same time generating multi-user diversity through the use of an adaptive assignment of bandwidth blocks based on the threshold parameters used. In addition, as the different subcarriers within each bandwidth block are localised instead of being spread over the entire frequency band used, as is done for example in WiMAX (Worldwide Interoperability for Microwave Access) or Flash-OFDM (Orthogonal Frequency Division Multiplexing), the subcarriers can be assigned link-adaptively.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method for scheduling at least one transmission of a plurality of transmissions between at least one user equipment (1) of a plurality of user equipments (1) and at least one access node (100) of a plurality of access nodes (100) in a radio communications system (1000), comprising the steps of:
- transmitting by said at least one access node (100) to said at least one user equipment (1) a first message, said first message indicating to said at least one user equipment (1) an allocation of at least one bandwidth block of a plurality of bandwidth blocks for transmitting said at least one transmission;
- determining by said at least one access node (100) an amount of interference present in said at least one transmission received by said access node (100), and
- transmitting by said at least one access node (100) to said at least one user equipment (1), upon said amount of interference reaching and/or exceeding a threshold, a further message indicating at least one further bandwidth block for transmitting said at least one transmission, said further message having a shorter length than said first message.

2. Method according to claim 2, wherein said bandwidth blocks comprise of a plurality of adjacent frequencies.

3. Method according to any one of claims 1 or 2, wherein said amount of interference is determined using at least one of the following parameters: a signal interference plus noise ratio measurement, a signal to noise ratio, a bit error rate, a number of positive or negative acknowledgments, a channel gain value.

4. Method according to any one of the preceding claims 1 to 3, wherein said further message comprises of information indicating at least one of the following: a swapping of bandwidth blocks, an addition of bandwidth blocks, a shifting of bandwidth blocks.

5. Method according to any one of the preceding claims 1 to 4, wherein said first message is transmitted over a shared channel and said further message is transmitted over a common channel.

6. Method according to any one of the preceding claims 1 to 5, wherein a SC-FDMA transmission scheme is used.

7. Access node (100) of a plurality of access nodes in a radio communications system (1000) comprising means adapted for scheduling at least one transmission of a plurality of transmissions between a user equipment of a plurality of user equipments and said access node, comprising:
- transceiver means (101) arranged to transmit to said at least one user equipment a first message, said first message indicating to said at least one user equipment (1) an allocation of at least one bandwidth block of a plurality of bandwidth blocks for transmitting said at least one transmission;
- control means (102) arranged to determine an amount of interference present in said at least one transmission received by said access node (100), and
- transceiver means (101) further arranged to transmit to said at least one user equipment (1), upon said amount of interference reaching and/or exceeding a threshold, a further message indicating at least one further bandwidth block for transmitting said at least one transmission, said further message having a shorter length than said first message.

8. Access node (100) according to claim 7, wherein said control means (102) are further arranged to assign bandwidth blocks comprising of a plurality of adjacent frequencies.

9. Access node (100) according to any one of claims 7 or 8, wherein said control means (102) are further arranged to determine said amount of interference using at least one of the following parameters: a signal interference plus noise ratio measurement, a signal to noise ratio, a bit error rate, a number of positive or negative acknowledgments, a channel gain value.

10. Access node (100) according to any one of the previous claims 7 to 9, wherein said transceiver means (101) are further arranged to transmit said first message over a shared channel and to transmit said further message over a common channel.

11. Access node (100) according to any one of the previous claims 7 to 10, wherein said access node (100) is at least one of the following: a base station, a nodeB, a base station controller, a radio network controller.

12. Radio communications system (1000) comprising at least one access node (100) according to any one of claims 7 to 11.
